# EUROPÄISCHE PATENTSCHRIFT

(11) **EP 3 444 523 B1**
(45) Veröffentlichungstag und Bekanntmachung des Hinweises auf die Patenterteilung: **13.05.2020**
(21) Anmeldenummer: 17186757.5
(22) Anmeldetag: 18.08.2017
(51) Int. Cl.: F21S 8/02, F21V 15/01, F21V 17/16, F21V 8/00, F21Y 103/10, F21Y 115/10

(54) **LEUCHTE**
LUMINAIRE
LUMINAIRE

(43) Veröffentlichungstag der Anmeldung: 20.02.2019
(73) Patentinhaber: Engel, Hartmut S., 71634 Ludwigsburg (DE)
(72) Erfinder: Engel, Hartmut S., 71634 Ludwigsburg (DE)
(74) Vertreter: Manitz Finsterwald Patent- und Rechtsanwaltspartnerschaft mbB

(56) Entgegenhaltungen:
- EP-A1- 2 581 658
- WO-A1-02/44614
- CN-A- 105 485 584
- CN-A- 105 987 329
- CN-U- 203 963 721
- CN-U- 205 079 122
- US-A1- 2010 085 774
- US-A1- 2017 205 567

## Beschreibung

Die Erfindung betrifft eine Leuchte, insbesondere eine Einbauleuchte.

Leuchten dieser Art, die im Regelfall zur Innenraumbeleuchtung dienen, zeichnen sich durch eine flache Bauweise aus und nutzen die Vorteile der Langlebigkeit und des geringen Energieverbrauchs der als Leuchtmittel eingesetzten LEDs.

Aus der US 2010/085774 A1 ist eine, eine raumseitige Direktlichtfläche bildende Leuchte mit einer in einem Gehäuse gehalterten Lichtleitscheibe bekannt, in der eine oder mehrere, eine Lichtübertragung verhindernde Nuten eingebracht sind. Streifenförmige Anordnungen von LEDs zur Einkopplung von Licht in die Lichtleitscheibe sind entweder zwischen dem die Lichtleitscheibe umschließenden Rahmen und den äußeren Stirnflächen in der Lichtleitscheibe und/oder in den in der Lichtleitscheibe vorgesehenen Nuten angebracht. Auf diese Weise ist es möglich, die Lichtleitscheibe in eine Mehrzahl von lichtemittierende Blöcke von gegebenenfalls unterschiedlicher Form zu unterteilen und unterschiedliche Helligkeitsgrade in den einzelnen Blöcken zu realisieren.

Aus der US 2017/205567 A1 ist eine aus zwei Lichtleitscheiben bestehende Leuchte bekannt, wobei die beiden in einer gemeinsamen Ebene liegenden Lichtleitscheiben mit gegenseitigem Abstand und unter Ausbildung einer Lichteinkopplungskammer zwischen zwei einander zugewandten Randbereichen der beiden Lichtleitscheiben überdeckende Platten gehalten und fixiert sind. Die beiden so fixierten Lichtleitscheiben können formschlüssig von einem Rahmen umgeben sein. In der Lichteinkopplungskammer wird angestrebt, durch geeignete Lichtleitelemente oder Reflexionsflächen zu erreichen, dass die von der Lichtquelle kommenden Lichtstrahlen möglichst senkrecht auf die Stirnseiten der Lichtleitscheiben treffen.

Aufgabe der vorliegenden Erfindung ist es, insbesondere für den Deckeneinbau bestimmte Leuchten in konstruktiv einfacher, montagegünstiger Weise auszubilden und unter Gewährleistung einer gleichmäßigen Lichtfläche die Möglichkeit zur projektbezogenen Individualisierung der Leuchte zu schaffen.

Gelöst wird diese Aufgabe durch eine Leuchte gemäß Anspruch 1 und eine Einbauleuchte gemäß Anspruch 9.

Das an seinen Innenwänden vorzugsweise mit einer hochreflektierenden Beschichtung versehene Gehäuse nimmt die Lichtleitscheibe passend auf, wobei das Gehäuse sowohl für die gesamte obere Fläche sowie auch für die offenen Kanten der Lichtleitscheibe ringsum Reflexionsflächen bildet, die zur gleichmäßigen Verteilung des zentral eingespeisten Lichts wirksam beitragen. Der zur durchbiegungsfreien Halterung der Lichtleitscheibe am Gehäuseboden vorgesehene Lichtlenkrahmen bildet dabei ein lichtästhetisches Element, das auf einfache Weise eine projektbezogene Individualisierung der jeweiligen Leuchte gestattet.

Eine bevorzugt verwendete Lichteinkopplungseinheit wird insbesondere gebildet von einem eine streifenförmige Anordnung von LEDs tragenden Kühlkörper, der direkt oder über eine Justierlage an der Rückseite des Gehäusebodens anliegt, wobei sich die streifenförmige Anordnung von LEDs über eine Durchbrechung im Gehäuseboden in die Ausnehmung der Lichtleitscheibe erstreckt, einer raumseitig an der Lichtleitscheibe anliegenden Reflektorlage, deren Mittelbereich sich in Form eines Strahlteilers den LEDs gegenüberliegend in die Ausnehmung der Lichtleitscheibe erstreckt, sowie einem an der Reflektorlage anliegenden Blendenteil, das mit dem Kühlkörper verschraubt ist.

Die aus wenigen Komponenten sandwichartig aufgebaute Lichteinkopplungseinheit, mittels der das Licht beidseitig in die Lichtleitscheibe eingekoppelt wird, erbringt eine wesentliche Kostenersparnis durch die Verwendung von nur einem LED-Board. Des Weiteren ermöglicht diese Lichteinkopplungseinheit eine einfache, exakte und preiswerte Montage.

Vorteilhaft ist ferner, dass der innenseitig hochreflektierend beschichtete Gehäuseboden beiderseits der Ausnehmung in der Lichtleitscheibe zusammen mit der jeweils gegenüberliegenden Reflektorlage Lichtkammern bildet, die aufgrund der in diesen Kammern auftretenden Vielfachreflexionen zu einer besonders gleichmäßigen Verteilung des eingestrahlten Lichts über die Gesamtfläche der Lichtleitscheibe beitragen.

Ein weiteres vorteilhaftes Merkmal der Erfindung besteht darin, dass die am Gehäuseboden anliegende Fläche der Lichtleitscheibe mit gleichmäßig über die Gesamtfläche verteilten, Licht reflektierenden, streuenden und auskoppelnden Mikrostrukturen und/oder reflektierenden Punktmustern versehen ist.

Eine sich durch Minimierung der Einzelkomponenten auszeichnende und damit auch besonders kostengünstige Ausführungsvariante einer Einbauleuchte nach der Erfindung zeichnet sich dadurch aus, dass die Lichtleitscheibe von dem Gehäuseboden des aus Licht leitendem Material bestehenden Einbaugehäuses gebildet ist, dass im Gehäuseboden mittig eine beidendig geschlossene, langgestreckte Ausnehmung zur Aufnahme einer Lichteinkopplungseinheit vorgesehen ist, dass zumindest die Rückseite des Gehäusebodens mit gleichmäßig verteilten, Licht reflektierenden, streuenden und auskoppelnden Mikrostrukturen und/oder reflektierenden Punktmustern versehen und mit einer lichtdichten Reflexionsschicht abgedeckt ist, und dass im Gehäuse mit vorgebbarem Abstand zu den Gehäuseseitenwänden ein umlaufender Lichtlenk- und Stabilisierungsrahmen vorgesehen ist, der über den Gehäuseboden durchsetzende und an der Rückseite des Gehäusebodens anliegende Fixierlaschen befestigt ist.

Der Einsatz eines Gehäuses aus Licht leitendem Material, z.B. Plexiglas, macht die Verwendung einer zusätzlichen Lichtleitscheibe überflüssig, denn der Boden des aus Licht leitendem Material bestehenden Gehäuses kann erfindungsgemäß gleichzeitig als entsprechend dimensionierte Lichtleitscheibe genutzt werden, wobei die Lichteinkopplung praktisch in gleicher Weise wie bei den bisher beschriebenen Ausführungsvarianten erfolgt und demgemäß auch eine entsprechend gleichmäßige Lichtverteilung über die Gesamtfläche erhalten wird.

Die sich dabei zusätzlich ergebende Lichteinleitung in Gehäusenseitenwände und Gehäuseränder kann dabei einen weiteren Vorteil darstellen.

Der bevorzugt vorgesehene Lichtlenkrahmen aus Metall bildet gleichzeitig einen das Gesamtsystem stabilisierenden Rahmen, was im Hinblick auf das aus Kunststoffmaterial bestehende Gehäuse von besonderem Vorteil ist.

Die Rückseite des die Lichtleitscheibe bildenden Gehäusebodens ist mit einer Reflexionsschicht bedeckt, beispielsweise mittels hochweißem Lack abgedeckt, wobei über der weißen Schicht bevorzugt nochmals eine lichtdichte Lackschicht, z.B. in Silber, aufgebracht wird.

Wie bei den bereits beschriebenen Ausführungsbeispielen der Erfindung ist auch die Rückseite des Gehäusebodens mit einer Prismatik versehen, d.h. mit gleichmäßig über die Fläche verteilten, Licht reflektierenden, streuenden und auskoppelnden Mikrostrukturen und/oder reflektierenden Punktmustern.

Bevorzugt besteht die Mikrostruktur aus einer Vielzahl von gering beabstandeten oder sich geringfügig überlappenden Doppelpunkt-Auskoppelprismen mit durch deren Mittelpunkte verlaufender Richtungsachse, wobei die Richtungsachsen einer ersten Gruppe von Doppelpunkt-Auskoppelprismen auf einer ersten Geraden und die Richtungsachsen einer zweiten Gruppe von Doppelpunkt-Auskoppelprismen auf einer zweiten Geraden gelegen sind und diese beiden Geraden unter einem vorgebbaren, insbesondere spitzen Winkel zueinander verlaufen.

Diese Einscheiben-Mikroprismatik trägt zu einem hochpräzisen Erscheinungsbild der Leuchtfläche bei und ermöglicht außerdem eine im Einzelfall geforderte qualitativ hochwertige Leuchtdichtenreduzierung.

Eine sich durch besondere Einfachheit auszeichnende, kostengünstige und gleichzeitig lichttechnisch optimale Ausführungsform der Erfindung zeichnet sich dadurch aus, dass der Kühlkörper aus einem stabilen Aluminiumstreifen besteht, auf den das LED-Board geklebt ist, dass die Reflektorlage im Bereich der Ausnehmung in der Lichtleitscheibe als mittensymmetrischer Giebel zur Aufteilung des LED-Lichts auf beide Hälften der Lichtleitscheibe ausgebildet ist, und dass in das vorzugsweise aus Aluminiumblech bestehende Blendenteil Gewindebuchsen eingepresst sind, über die und zugehörige Schrauben der Sandwichaufbau stabil verspannt ist.

Die im Bereich der Ausnehmung in der Lichtleitscheibe als mittensymmetrischer Giebel ausgebildete Reflektorlage stellt einen wirksamen Strahlteiler dar, wobei sich die Reflektorlage bevorzugt bis zum Rand des Blendenteils erstreckt und der endseitige Übergang zum Giebelbereich als Schrägfläche ausgebildet ist, so dass auf diese Weise die vollflächige und gleichmäßige Beaufschlagung der Lichtleitscheibe mit eingestrahltem Licht gewährleistet werden kann.

Der für die ästhetische Prägung der Leuchte bedeutsame Lichtlenkrahmen wird von einem Profilrahmen mit einem vertikalen Stützschenkel für die Lichtleitscheibe und einem horizontalen Funktionsschenkel gebildet. Der Funktionsschenkel kann dabei mit Durchbrechungen vorgebbarer Form, Lage und Anzahl versehen sein und gleichzeitig eine Tragfläche für lichtdurchlässige Farbstreifen bilden.

Die für die erfindungsgemäße Leuchte charakteristische umlaufende Lichtfuge wird dadurch erhalten, dass der Lichtlenkrahmen ein einen Umfangslichtspalt bildenden Abstand zur Gehäusewand aufweist, wobei bevorzugt der Funktionsschenkel bündig zum Umfangsrand des Gehäuses verläuft. Da der Lichtlenkrahmen als einfaches Laser-Kant-Teil ausgeführt sein kann, können mit Perforationsmustern und/oder eingelegten Lichtleitfolien für das jeweilige Einzelprojekt individuelle Rahmen äußerst kostengünstig und schnell angefertigt werden.

Weitere vorteilhafte Merkmale und Besonderheiten der Erfindung werden anhand der nachfolgend beschriebenen Ausführungsbeispiele anhand der Zeichnungen erläutert.

In der Zeichnung zeigt:
- Fig. 1: eine Ausführungsform einer Einbauleuchte nach der Erfindung in einer Querschnittsdarstellung,
- Fig. 2: eine Darstellung der Einzelteile der Leuchte nach Fig. 1 in Form einer Explosionsdarstellung,
- Fig. 3: eine Teilschnittdarstellung der Leuchte nach Fig. 1 zur Erläuterung der Befestigung der Lichtleitscheibe im Gehäuse,
- Fig. 4: eine Teilschnittdarstellung der montierten Lichteinkopplungseinheit im Querschnitt,
- Fig. 5: eine Teilschnittdarstellung der Lichteinkopplungseinheit nach Fig. 4 im Längsschnitt,
- Fig. 6: eine Teilansicht der in eine Raumdecke eingebauten Leuchte,
- Fig. 7: eine Darstellung zur Erläuterung einer in der Lichtleitscheibe ausgebildeten Prismenstruktur,
- Fig. 8: eine bevorzugte Ausführungsvariante einer Einbauleuchte nach der Erfindung,
- Fig. 9: eine vergrößerte Detaildarstellung der Lichteinkopplungseinheit nach Fig. 8, und
- Fig. 10: eine Teildarstellung der Leuchte nach Fig. 8 zur Erläuterung eines dabei verwendeten Lichtlenk- und Stabilisierungsrahmens.

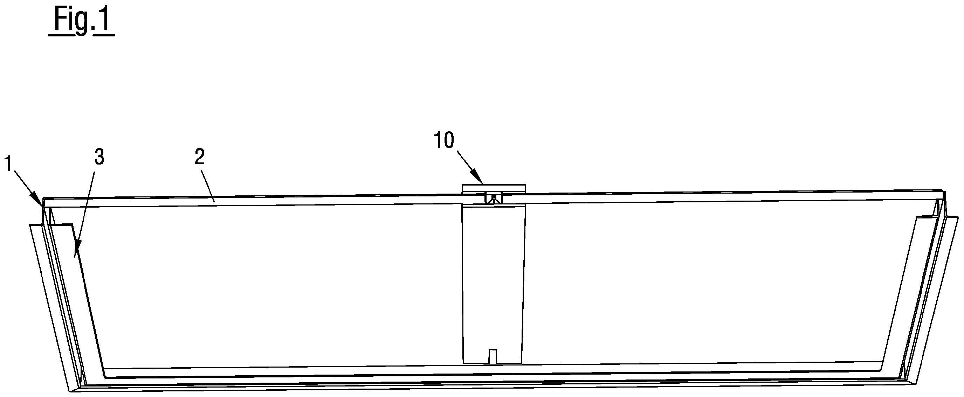

Nach Fig. 1 besteht eine Ausführungsform der Erfindung in Form einer rechteckförmigen Einbauleuchte aus einem flachen Gehäuse 1, beispielsweise in Form eines Laser-Kant-Teils aus Stahlblech, das insbesondere innenseitig mit einer stark reflektierenden weißen Pulverschicht beschichtet ist. Am Boden des Gehäuses 1 anliegend ist eine passend in das Gehäuse eingefügte Lichtleitscheibe 2 vorgesehen, die mittels eines im Einzelnen noch zu beschreibenden Lichtlenkrahmens 3 fixiert ist.

In der Mitte des Gehäuses ist eine Lichteinkopplungseinheit 10 vorgesehen, deren Aufbau ebenfalls noch im Detail erläutert wird.

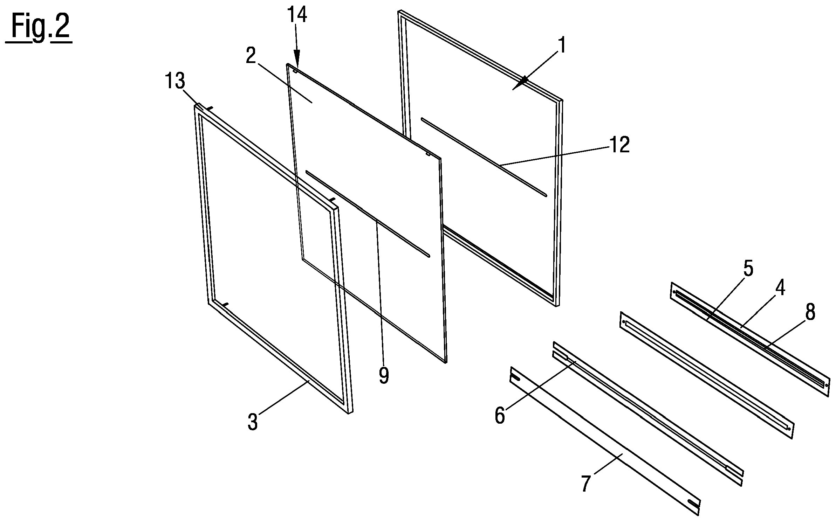

Die Darstellung nach Fig. 2 zeigt die einzelnen Bestandteile der Leuchte nach Fig. 1, wobei diese Darstellung bereits den äußerst einfachen, kosten- und montagegünstigen Aufbau erkennen lässt.

Das flache rechteckige Gehäuse 1 ist im Gehäuseboden mittig mit einer schlitzartigen Durchbrechung 12 versehen, die sich über den größten Teil der Breite des Gehäuses erstreckt.

Eine Lichtleitscheibe 2 in Form einer beispielsweise etwa 6 mm starken PMMA-Scheibe kann passend in das Gehäuse 1 eingesetzt werden. Diese Lichtleitscheibe 2 ist mit einer der Durchbrechung 12 im Gehäuseboden entsprechenden Ausnehmung 9 versehen, und außerdem sind in der Lichtleitscheibe benachbart den jeweiligen Ecken Öffnungsschlitze 14 vorgesehen, durch die Fixierlaschen 13 treten können, die am Lichtlenkrahmen 3 vorgesehen sind. Dieser Lichtlenkrahmen 3 besteht vorzugsweise auch aus einem Laser-Kant-Teil aus Stahlblech mit einer Stärke von beispielsweise 0,7 bis 1,0 mm. Der Lichtlenkrahmen 3 ist insbesondere pulverbeschichtet mit "Reflexions-Weiß", wobei nach erfolgtem Zusammenbau dieser drei Komponenten die Fixierlaschen 13 sich durch die Öffnungsschlitze 14 in der Lichtleitscheibe 2 und entsprechend vorgesehene Schlitze in der Bodenwand des Gehäuses 1 erstrecken und an der Gehäuserückseite umgebogen sind. Auf diese Weise wird die Lichtleitscheibe 3 unsichtbar auf dem gesamten Umfang und spaltfrei auf der reflektierenden Gehäusefläche gehalten.

Die Lichteinkopplungseinheit 10 besteht aus vier einzelnen Komponenten, nämlich einem Kühlkörper 4 mit aufgeklebtem LED-Board 8, wobei der Kühlkörper beispielsweise aus einem Aluminiumblech von 5 mm Stärke in Form eines Laserteils bestehen kann, sowie
einem Zwischenelement bzw. einer Justierlage 5, bei dem es sich ebenfalls um ein weiß beschichtetes Laserteil aus Aluminiumblech von etwa 2 mm Stärke handeln kann. Diese Justierlage 5 besitzt eine Ausnehmung, durch die die LED-Anordnung 8 treten kann.

Ferner aus einer Reflektorlage 6, die bevorzugt aus einem hochreflektierenden weißen Kunststoff besteht und beispielsweise eine Wanddicke von etwa 0,5 mm besitzt. Diese Reflektorlage ist als Strahlteiler ausgebildet.

Schließlich ist ein vorzugsweise ebenfalls aus einem Laserteil bestehendes Blendenteil 7 aus beispielsweise etwa 2,5 mm starkem Aluminiumblech mit weißer Beschichtung vorgesehen, das zwei eingepresste Gewindebuchsen aufweist, die es ermöglichen, das Blendenteil 7 mit dem Kühlkörper 4 zu verschrauben.

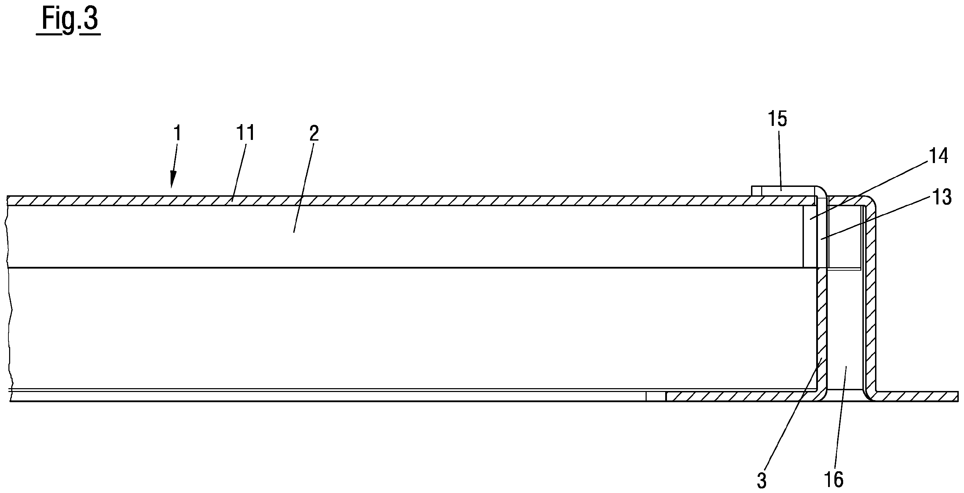

Die Teilansicht nach Fig. 3 zeigt im Einzelnen die Art der Befestigung der Lichtleitscheibe 2 im Gehäuse 1 mittels des Lichtlenkrahmens 3, der zu diesem Zweck benachbart zu seinen Eckbereichen Fixierlaschen 13 aufweist, die sich durch gegenseitig ausgerichtete Öffnungsschlitze 14 in der Lichtleitscheibe 3 und einer an den Laschenquerschnitt angepassten Durchbrechung im Gehäuseboden 11 erstrecken, wobei das Laschenende 15 so umgebogen ist, dass die einzelnen Komponenten zusammengehalten werden und die Lichtleitscheibe 3 spaltfrei am reflektierenden Gehäuseboden 11 anliegt und die Stirnflächen der Lichtleitscheibe direkt an die reflektierenden Seitenblenden angrenzen, so dass es nicht erforderlich ist, gesonderte reflektierende Flächen oder entsprechend reflektierende Elemente vorzusehen. Allerdings sei erwähnt, dass es auch als im Rahmen der Erfindung liegend betrachtet wird, wenn beispielsweise für die Stirnflächen eigene Reflexionsschichten direkt an den Stirnflächen angebracht werden.

Für die ästhetische Prägung der Leuchte ist der zwischen Gehäuse 1 und Lichtlenkrahmen vorgesehene umlaufende Lichtspalt von wesentlicher Bedeutung, was im Einzelnen noch erläutert wird.

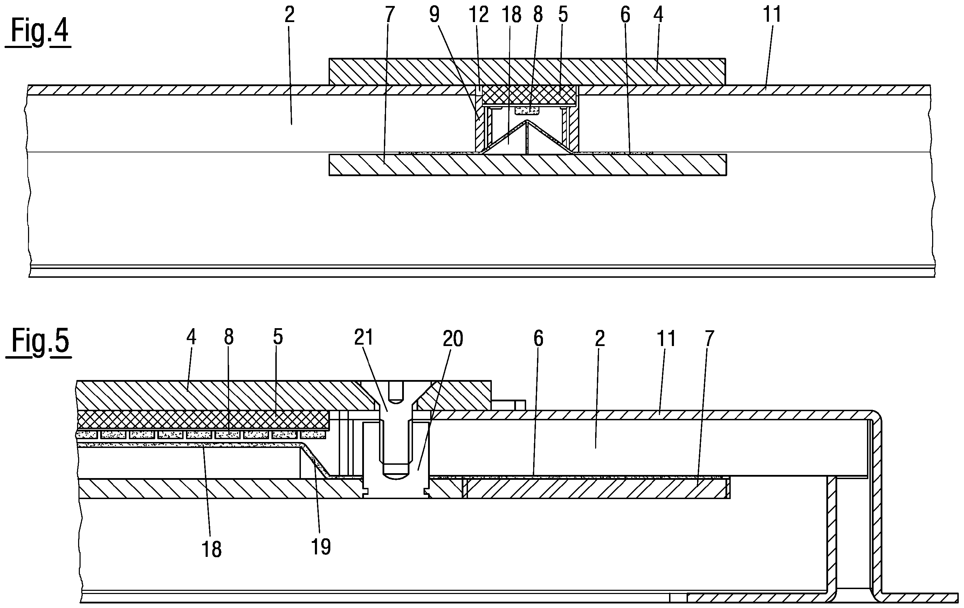

Die Teil-Querschnittsansicht nach Fig. 4 zeigt die Lichteinkopplungseinheit 10 im montierten Zustand. An der Außenseite des Gehäusebodens 11 liegt der streifenförmige Kühlkörper 4 direkt an, und über die Justierlage 5 ist die LED-Anordnung 8 so in der Ausnehmung 9 der Lichtleitscheibe 2 positioniert, dass sich im Zusammenwirken mit der der LED-Anordnung 8 gegenüberliegenden Strahlteileranordnung 18 eine gleichmäßige Verteilung des von den LEDs erzeugten Lichts in beide Seitenbereiche der Lichtleitscheibe 2 ergibt.

Der giebelförmige Strahlteiler 18 wird von der Reflektorlage 6 gebildet, die sich zwischen der Lichtleitscheibe 2 und dem Blendenteil 7 befindet.

Zwischen dem reflektierend ausgebildeten Gehäuseboden und der reflektierenden Fläche der Lage 6 sind jeweils Lichtleitkammern gebildet, die einerseits den notwendigen Ausblendschutz bewirken und andererseits aufgrund der in diesen Räumen auftretenden Vielfach-Reflexionen für eine gleichmäßige Lichtverteilung in der Lichtleitscheibe sorgen.

Die Längsschnittansicht der Lichteinkopplungseinheit in Fig. 5 lässt zum einen erkennen, dass die den Strahlteiler 18 bildende Reflektorlage 6 im Bereich des Endes der streifenförmigen LED-Anordnung 8 als Reflektor-Schrägfläche 19 ausgebildet ist und sich dann bis zum Ende des Blendenteils 7 erstreckt. Diese Gestaltung gewährleistet, dass auch alle außenliegenden Randbereiche der Lichtleitscheibe 2 gleichmäßig ausgeleuchtet sind.

Des Weiteren ist zu sehen, dass in das Blendenteil 7 Gewindebuchsen 20 eingeprägt sind, so dass mittels an dem Kühlkörper 4 abgestützter Schrauben die einzelnen Komponenten sandwichartig miteinander und dem Gehäuseboden 11 verspannt werden können und sich dadurch auch eine exakte Positionierung der Lichteinkopplungseinheit im Gehäuse erzielen lässt.

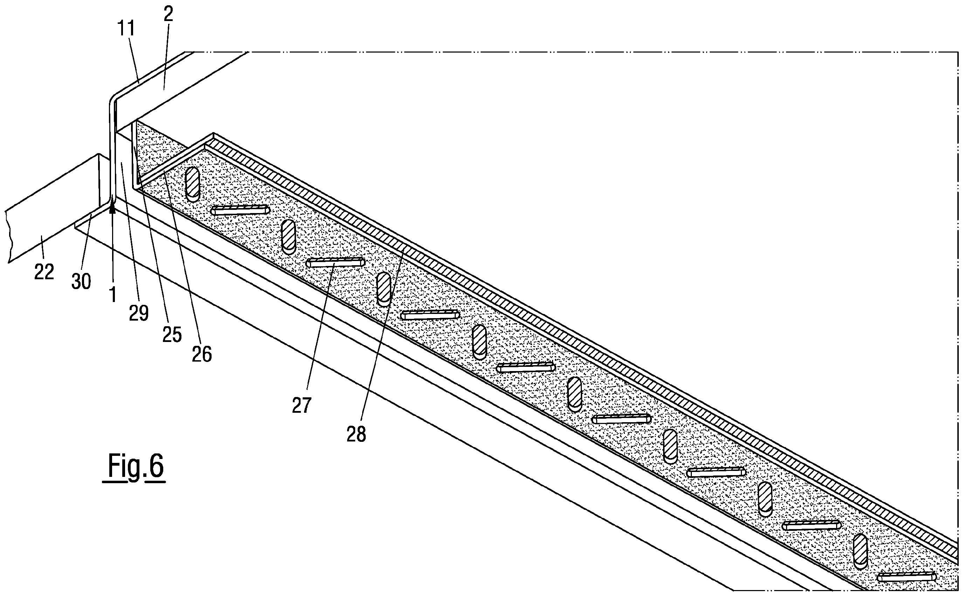

Die Teildarstellung nach Fig. 6 zeigt eine in eine Decke 22 bündig eingebaute Leuchte, wobei der vom Gehäuse 1 rechtwinklig nach außen abgewinkelte Umfangsrand 30 an der Decke 22 anliegt. Die am Gehäuseboden 11 anliegende Lichtleitscheibe 2 wird in der bereits erläuterten Weise im Umfangsbereich durch den vom Stützschenkel 25 und dem Funktionsschenkel 26 gebildeten Lichtlenkrahmen gehalten. Zwischen dem Stützschenkel 25 und der Gehäusewandung ist der Umfangslichtspalt 29 gebildet, wobei die so gebildete Lichtfuge ein insbesondere ästhetisch bedeutsames Merkmal darstellt.

Der Funktionsschenkel 26 stellt ein lichtästhetisches Element dar, das insbesondere eine projektbezogene Individualisierung der Leuchte dadurch ermöglicht, dass in diesem Funktionsschenkel Durchbrechungen unterschiedlichster Art und Anordnungen vorgesehen sein können, durch die spezielle Lichtaustrittsmuster geschaffen werden. Verstärkt werden kann diese ästhetische Wirkung noch dadurch, dass dieser Funktionsschenkel als Trägerschenkel für Farbstreifen 28 verwendet wird, wodurch die Ästhetik der Leuchte besonders charakteristisch beeinflusst werden kann.

All diese vielfältig möglichen Maßnahmen sind stets in Verbindung mit dem extrem einfachen Aufbaukonzept der Leuchte zu sehen.

Es wurde bereits darauf hingewiesen, dass die Lichtleitscheibe 2 gehäusebodenseitig mit einer Mikroprismatik zur Beeinflussung der lichttechnischen Parameter versehen ist.

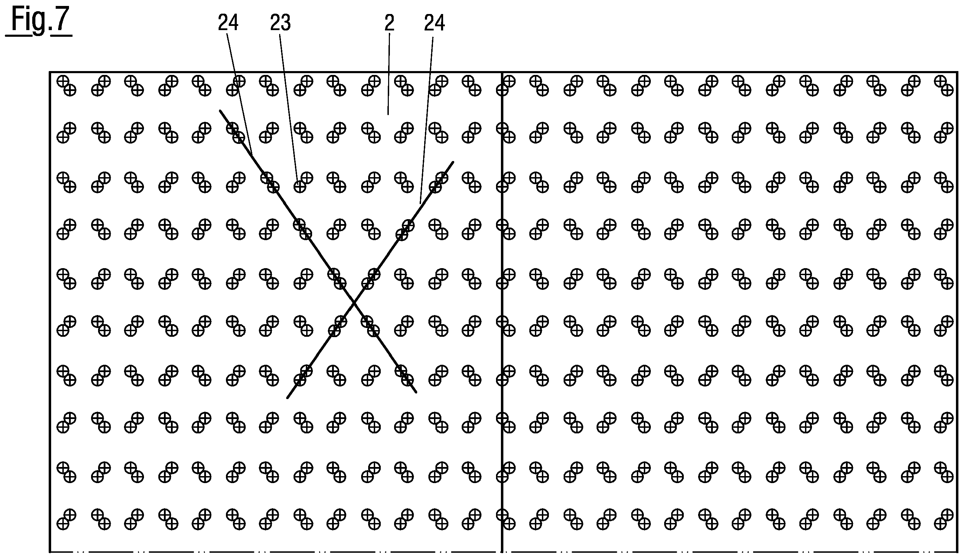

Fig. 7 zeigt eine bevorzugte Mikroprismatik gemäß der Erfindung, wobei die gezeigte Mikrostruktur aus einer Vielzahl von gering beabstandeten oder sich geringfügig überlappenden Doppelpunkt-Auskoppelprismen 23 besteht. Verbindet man die Mittelpunkte der Doppelpunkt-Auskoppelprismen, so erhält man eine Richtungsachse 24 und die Fig. 7 lässt erkennen, dass in dem gewählten Ausführungsbeispiel die Richtungsachsen 24 einer ersten Gruppe von Doppelpunkt-Auskoppelprismen 23 auf einer ersten Geraden und die Richtungsachsen 24 einer weiteren Gruppe von Doppelpunkt-Auskopplungsprismen 23 auf einer zweiten Geraden gelegen sind. Die beiden Geraden verlaufen unter einem vorzugsweise spitzen Winkel zueinander, wobei die Geraden der einen Gruppe die Geraden der anderen Gruppe bevorzugt an einem Punkt schneiden, der zwischen einem Paar von Doppelpunkt-Prismen gelegen ist. Die in Fig. 7 gezeigte symmetrische Anordnung ist unter lichttechnischen Aspekten bevorzugt.

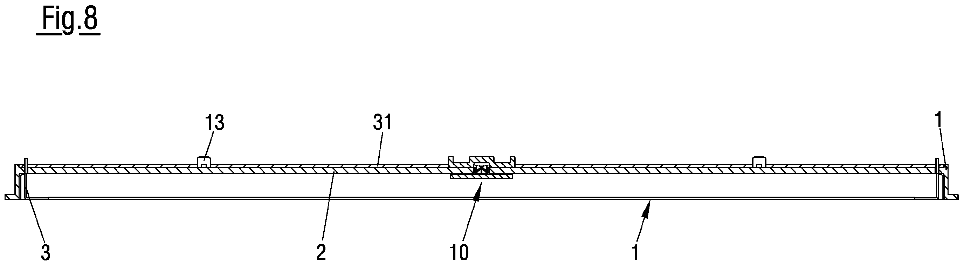

Bei den Doppelpunkt-Auskopplungsprismen handelt es sich um lichtreflektierende, streuende und auskoppelnde Mikrostrukturen oder reflektierende Punktmuster. Die Ausführungsvariante nach Fig. 8 zeichnet sich insbesondere dadurch aus, dass die Lichtleitscheibe von dem Boden 2 des insgesamt aus einem Licht leitenden Material, z.B. Plexiglas, bestehenden Gehäuses 1 gebildet wird.

Dazu wird die Materialdicke des Gehäusebodens entsprechend der gewünschten Dicke der Lichtleitscheibe gewählt und in der Mitte des Gehäusebodens ein langgestreckter Schlitz zur Aufnahme der Lichteinkopplungseinheit 10 ausgebildet, wie dies bereits vorstehend im Zusammenhang mit einer separaten Lichtleitscheibe erläutert worden ist. Die Rückseite des Gehäusebodens ist wiederum analog der bisher bereits beschriebenen Lichtleitscheiben mit einer Mikrostruktur bzw. Prismatik versehen, die durch das Werkzeug zur Herstellung des Gehäuses definiert werden kann. Um die notwendige rückseitige Reflexionsschicht zu erzeugen, wird die gesamte Rückseite des Gehäuses mit hochweißem Lack abgedeckt, und über der weißen Schicht wird nochmals eine lichtdichte Lackschicht, z.B. in Silber aufgetragen, wobei diese Lösung ein bevorzugtes Beispiel darstellt.

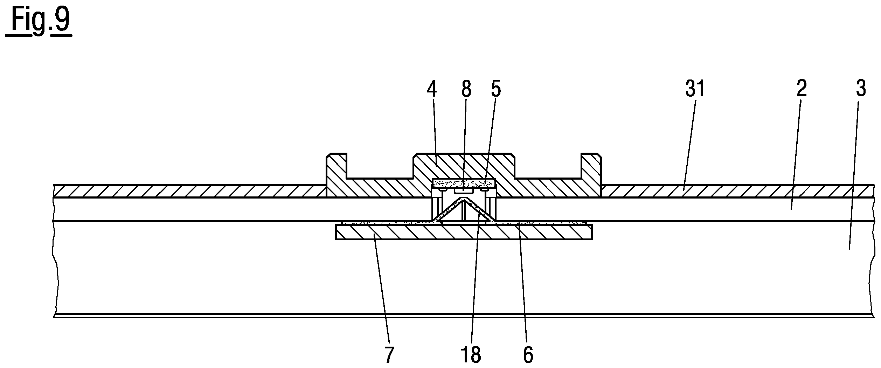

Das Gehäuse 1 ist wie in dem bereits beschriebenen Ausführungsbeispiel mit einem Lichtlenkrahmen 3 versehen, der bevorzugt aus Metall besteht und in diesem Falle gleichzeitig einen Stabilisierungsrahmen bildet, um der Gesamtleuchte mit aus Kunststoffmaterial bestehendem Gehäuse die notwendige Biegesteifheit zu verleihen.
Die vergrößerte Detaildarstellung nach Fig. 9 zeigt den Detailaufbau der Lichteinkopplungseinheit, die wiederum weitgehend mit der bereits im Zusammenhang mit einer separaten Lichtleitscheibe beschriebenen Lichteinkopplungseinheit übereinstimmt und auch die in diesem Zusammenhang bereits geschilderten Vorteile erbringt.

Im Einzelnen besteht diese Lichteinkopplungseinheit aus einem Kühlkörper 4 mit aufgeklebtem LED-Bord 8, wobei der Kühlkörper vorzugsweise aus Aluminium und beispielsweise aus einem Aluminiumblech in Form eines Laserteils oder einem Aluminium-Strangpressprofil bestehen kann. Ferner weist die Einkopplungseinheit eine Reflektorlage 6 auf, die bevorzugt aus einem hoch reflektierenden, weißen Kunststoff besteht und beispielsweise eine Wanddicke von etwa 0,5 mm besitzt. Diese Reflektorlage ist als Strahlteiler ausgebildet.

Schließlich ist ein vorzugsweise ebenfalls aus einem Laserteil bestehendes Blendenteil 7 aus vorzugsweise etwa 2,5 mm starkem Aluminiumblech mit weißer Beschichtung vorgesehen, das eingepresste Gewindebuchsen aufweist, die es ermöglichen, das Blendenteil 7 mit dem Kühlkörper 4 zu verschrauben.

Funktionell entspricht diese Anordnung der bereits im Zusammenhang mit den vorstehenden Ausführungsbeispielen beschriebenen Lichteinkopplungseinheit.

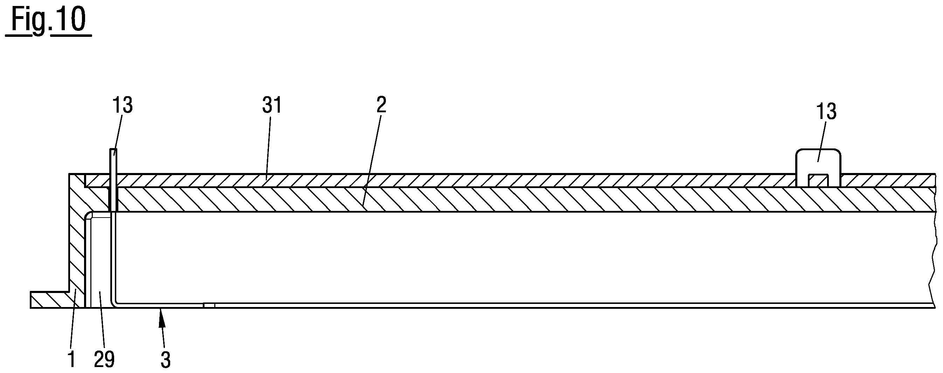

Die Teildarstellung der Einbauleuchte nach Fig. 10 zeigt das Zusammenwirken von Kunststoffgehäuse 1 und Lichtlenk- und Stabilisierrahmen 3.

Ersichtlich ist aus dieser Darstellung auch, dass sich die Reflexionsschicht 31 bis an den Außenrand des Gehäusebodens erstreckt, so dass an dieser Schicht reflektiertes Licht auch in die Seitenwandbereiche des Gehäuses geleitet werden kann.

Der Lichtlenk- und Stabilisierungsrahmen 3 wird wiederum von einem Stützschenkel und einem Funktionsschenkel gebildet, wobei zwischen dem Stützschenkel und der Gehäusewandung ein Umfangslichtspalt 29 ausgebildet wird und dieser Umfangslichtspalt eine Lichtfuge bildet, wie sie bereits im Zusammenhang mit den anderen Ausführungsbeispielen beschrieben worden ist.

Der vertikale Stützschenkel weist über seinen Umfang mehrere Fixierlaschen auf, die sich durch entsprechende Schlitze des Gehäusebodens erstrecken und dann, wenn sie umgebogen sind und flächig am Gehäuseboden anliegen, den erforderlichen festen Verbund zwischen Gehäuse und Rahmen gewährleisten.

Ausdrücklich ist darauf hinzuweisen, dass sämtliche Ausgestaltungsmöglichkeiten und daraus resultierende Vorteile, die im Zusammenhang mit den Fig. 1 bis 7 beschrieben worden sind, auch bei der Ausführungsform nach den Fig. 8 bis 10 Gültigkeit haben und hinsichtlich der konstruktiven Merkmale verwendbar sind.

### Bezuqszeichenliste

- 1: Gehäuse
- 2: Lichtleitscheibe (Gehäuseboden)
- 3: Lichtlenkrahmen
- 4: Kühlkörper
- 5: Justierlage (Zwischenelement)
- 6: Reflektorlage
- 7: Blendenteil
- 8: LED-Anordnung streifenförmig
- 9: Ausnehmung in Lichtleitscheibe
- 10: Lichteinkopplungseinheit
- 11: Gehäuseboden
- 12: Ausnehmung, Durchbrechung im Gehäuseboden
- 13: Fixierlaschen
- 14: Öffnungsschlitz
- 15: Laschenende
- 16: Lichtspalt
- 17: LED-Tragestreifen
- 18: Strahlteiler
- 19: Reflektorschräge
- 20: Gewindebolzen
- 21: Schraube
- 22: Raumdecke
- 23: Doppelpunkt-Auskoppelprisma
- 24: Richtungsachse
- 25: Stützschenkel
- 26: Funktionsschenkel
- 27: Durchbrechungen
- 28: Farbstreifen
- 29: Umfangslichtspalt
- 30: Umfangsrand
- 31: Reflexionsschicht

## Patentansprüche

1. Leuchte, insbesondere Einbauleuchte,
mit einer eine raumseitige Direktlichtfläche bildenden, in einem Gehäuse (1) gehalterten Lichtleitscheibe (2) und einer zumindest einer Stirnfläche der Lichtleitscheibe (2) zugeordneten streifenförmigen Anordnung (8) von LEDs zur Einkopplung von Licht in die Lichtleitscheibe,
wobei die Lichtleitscheibe (2) und der Gehäuseboden (11) mittig jeweils eine beidendig geschlossene, langgestreckte Ausnehmung (9, 12) zur Aufnahme einer Lichteinkopplungseinheit (10) aufweisen, wobei der Gehäuseboden (11) und die die Lichtleitscheibe (2) umschließenden Seitenwände des Gehäuses (1) als Reflexionsflächen ausgebildet sind, und
wobei die Lichtleitscheibe (2) am Gehäuseboden (11) flächig anliegend mittels eines Lichtlenkrahmens (3) gehaltert ist,
der die Lichtleitscheibe (2) und den Gehäuseboden (11) durchsetzende und an der Rückseite des Gehäusebodens (11) anliegende Fixierlaschen (13) aufweist.

2. Leuchte nach Anspruch 1,
**dadurch gekennzeichnet,**
**dass** die Lichteinkopplungseinheit (10) gebildet wird
von einem eine streifenförmige Anordnung von LEDs tragenden Kühlkörper (4), der direkt oder über eine Justierlage (5) an der Rückseite des Gehäusebodens (11) anliegt, wobei sich die streifenförmige Anordnung von LEDs (8) über eine Durchbrechung (12) im Gehäuseboden (11) in die Ausnehmung (9) der Lichtleitscheibe (2) erstreckt,
einer raumseitig an der Lichtleitscheibe (2) anliegenden Reflektorlage (6), deren Mittelbereich sich in Form eines Strahlteilers (18) den LEDs gegenüberliegend in die Ausnehmung (9) der Lichtleitscheibe (2) erstreckt,
sowie einem an der Reflektorlage (6) anliegenden Blendenteil (7), das mit dem Kühlkörper (4) verschraubt ist.

3. Leuchte nach Anspruch 1 oder 2,
**dadurch gekennzeichnet,**
**dass** der innenliegende, hochreflektierend beschichtete Gehäuseboden (11) beiderseits der Ausnehmung (9) in der Lichtleitscheibe (2) zusammen mit der gegenüberliegenden Reflektorlage (6) Lichtkammern (20) bildet, in denen durch Vielfachreflexionen eine gleichförmige Verteilung des eingespeisten Lichts über die Gesamtfläche der Lichtleitscheibe (2) bewirkt wird.

4. Leuchte nach Anspruch 3,
**dadurch gekennzeichnet,**
**dass** die am Gehäuseboden (11) anliegende Fläche der Lichtleitscheibe (2) mit gleichmäßig über die Gesamtfläche verteilten, Licht reflektierenden, streuenden und auskoppelnden Mikrostrukturen und/oder reflektierenden Punktmustern versehen ist.

5. Leuchte nach Anspruch 4,
**dadurch gekennzeichnet,**
**dass** die Mikrostruktur aus einer Vielzahl von gering beabstandeten oder sich geringfügig überlappenden Doppelpunkt-Auskoppelprismen (23) mit durch deren Mittelpunkte verlaufender Richtungsachse (24) besteht, wobei die Richtungsachsen (24) einer ersten Gruppe von Doppelpunkt-Auskoppelprismen (23) auf einer ersten Geraden und die Richtungsachsen (24) einer zweiten Gruppe von Doppelpunkt-Auskoppelprismen (23) auf einer zweiten Geraden gelegen sind und diese beiden Geraden unter einem vorgebbaren, insbesondere spitzen Winkel zueinander verlaufen.

6. Leuchte nach Anspruch 2,
**dadurch gekennzeichnet,**
**dass** der Kühlkörper (4) aus einem stabilen Aluminiumstreifen oder einem Aluminium-Strangpressprofil besteht, auf den das LED-Board geklebt ist,
**dass** die Reflektorlage (6) im Bereich der Ausnehmung (9) in der Lichtleitscheibe (2) als mittensymmetrischer Giebel zur Aufteilung des LED-Lichts auf beide Hälften der Lichtleitscheibe (2) ausgebildet ist, und
**dass** in das vorzugsweise aus Aluminiumblech bestehende Blendenteil (7) Gewindebuchsen (20) eingepresst sind, über die und zugehörige Schrauben (21) der Sandwichaufbau stabil verspannt ist.

7. Leuchte nach Anspruch 1,
**dadurch gekennzeichnet,**
**dass** der Lichtlenkrahmen (3) von einem Profilrahmen mit einem vertikalen Stützschenkel (25) für die Lichtleitscheibe (2) und einem horizontalen Funktionsschenkel (26) gebildet wird,
wobei der Funktionsschenkel (26) mit Durchbrechungen (27) von vorgebbarer Form, Lage und Anzahl versehen sein kann und/oder eine Tragfläche für lichtdurchlässige Farbstreifen (28) bildet.

8. Leuchte nach Anspruch 7,
**dadurch gekennzeichnet,**
**dass** der Lichtlenkrahmen (3) einen einen Umfangslichtspalt (29) bildenden Abstand zur Gehäusewand aufweist und der Funktionsschenkel (26) bündig zum Umfangsrand (30) des Gehäuses (1) verläuft.

9. Einbauleuchte mit einem Einbaugehäuse (1) und einer eine raumseitige Direktlichtfläche bildenden Lichtleitscheibe sowie einer zumindest einer Stirnfläche der Lichtleitscheibe zugeordneten streifenförmigen Anordnung (8) von LEDs, zur Einkopplung von Licht in die Lichtleitscheibe, wobei die Lichtleitscheibe von dem Gehäuseboden (2) des aus Licht leitendem Material bestehenden Einbaugehäuses (1) gebildet ist,
wobei im Gehäuseboden (2) mittig eine beidendig geschlossene, langgestreckte Ausnehmung (9) zur Aufnahme einer Lichteinkopplungseinheit (10) vorgesehen ist,
wobei zumindest die Rückseite des Gehäusebodens (2) mit gleichmäßig verteilten, Licht reflektierenden, streuenden und auskoppelnden Mikrostrukturen und/oder reflektierenden Punktmustern versehen und mit einer lichtdichten Reflexionsschicht (31) abgedeckt ist, und
dass im Gehäuse (1) mit vorgebbarem Abstand zu den Gehäuseseitenwänden ein umlaufender Lichtlenk- und Stabilisierungsrahmen (3) vorgesehen ist, der über den Gehäuseboden (2) durchsetzende und an der Rückseite des Gehäusebodens anliegende Fixierlaschen (13) befestigt ist.

10. Einbauleuchte nach Anspruch 9, **dadurch gekennzeichnet,**
**dass** die Lichteinkopplungseinheit (10) gebildet wird,
von einem eine streifenförmige Anordnung von LEDs tragenden Kühlkörper (4), der direkt oder über eine Zwischenlage an der Rückseite des Gehäusebodens (2) anliegt, wobei sich die streifenförmige Anordnung von LEDs in die Ausnehmung (9) des die Lichtleitscheibe bildenden Gehäusebodens (2) erstreckt, sowie
einer raumseitig an der Lichtleitscheibe (2) anliegenden Reflektorlage (6), deren Mittelbereich sich in Form eines Strahlteilers (18) den LEDs gegenüberliegend in die Ausnehmung (9) des Gehäusebodens (2) erstreckt, sowie einem an der Reflektorlage (6) anliegenden Blendenteil (7), das mit dem Kühlkörper (4) verschraubt ist.

## Claims

1. A luminaire, in particular a built-in luminaire,
comprising a light guide panel (2) forming a room-side direct light surface and held in a housing (1); and a strip-shaped arrangement (8) of LEDs associated with at least one end face of the light guide panel (2) for coupling light into the light guide panel,
wherein the light guide panel (2) and the housing base (11) each centrally have an elongated recess (9, 12) closed at both ends for receiving a light coupling unit (10); wherein the housing base (11) and the side walls of the housing (1) surrounding the light guide panel (2) are configured as reflection surfaces; and
wherein the light guide panel (2) is held areally contacting the housing base (11) by means of a light guide frame (3),
said light guide frame (3) having fixing lugs (13) which pass through the light guide panel (2) and the housing base (11) and which contact the rear side of the housing base (11).

2. A luminaire in accordance with claim 1,
**characterized in that**
the light coupling unit (10) is formed
by a heat sink (4) which supports a strip-shaped arrangement of LEDs and which contacts the rear side of the housing base (11) directly or via an adjustment layer (5), with the strip-shaped arrangement of LEDs (8) extending via an opening (12) in the housing base (11) into the recess (9) of the light guide panel (2);
by a reflector layer (6) which contacts the light guide panel (2) at the room side and whose central region extends in the form of a beam splitter (18) opposite the LEDs into the recess (9) of the light guide panel (2);
and by a diaphragm part (7) contacting the reflector layer (6) and screwed to the heat sink (4).

3. A luminaire in accordance with claim 1 or claim 2,
**characterized in that**
the inwardly disposed housing base (11) having a highly reflective coating forms light chambers (20) at both sides of the recess (9) in the light guide panel (2) together with the oppositely disposed reflector layer (6), in which light chambers (20) a uniform distribution of the light fed in is effected over the total surface of the light guide panel (2) by multiple reflections.

4. A luminaire in accordance with claim 3,
**characterized in that**
the surface of the light guide panel (2) contacting the housing base (11) is provided with microstructures which are distributed uniformly over the total surface and which reflect, scatter and decouple light and/or is provided with reflective dot patterns.

5. A luminaire in accordance with claim 4,
**characterized in that**
the microstructure comprises a plurality of slightly spaced apart or slightly overlapping dual-point decoupling prisms (23) having a directional axis (24) which extends through their centers,
with the directional axes (24) of a first group of dual-point decoupling prisms (23) being disposed on a first straight line and the directional axes (24) of a second group of dual-point decoupling prisms (23) being disposed on a second straight line and these two straight lines extending at a predefinable angle, in particular an acute angle, to one another.

6. A luminaire in accordance with claim 2,
**characterized in that**
the heat sink (4) comprises a stable aluminum strip or an extruded aluminum section onto which the LED board is adhesively bonded;
**in that** the reflector layer (6) in the region of the recess (9) in the light guide panel (2) is formed as a centrally symmetrical gable for splitting the LED light between two halves of the light guide panel (2); and
**in that** threaded bushings (20), via which associated screws (21) of the sandwich structure are tensioned in a stable manner, are pressed into the diaphragm part (7) which preferably comprises an aluminum sheet.

7. A luminaire in accordance with claim 1,
**characterized in that**
the light guide frame (3) is formed by a sectional frame having a vertical support limb (25) for the light guide panel (2) and having a horizontal functional limb (26),
with the functional limb (26) being able to be provided with openings (27) of a predefinable shape, position and number and/or forming a support surface for light-permeable color strips (28).

8. A luminaire in accordance with claim 7,
**characterized in that**
the light guide frame (3) has a spacing from the housing wall, said spacing forming a peripheral light gap (29), and the functional limb (26) extends in alignment with the peripheral margin (30) of the housing (1).

9. A built-in luminaire comprising a built-in housing (1); a light guide panel forming a room-side direct light surface; and a strip-shaped arrangement (8) of LEDs associated with at least one end face of the light guide panel for coupling light into the light guide panel, wherein
the light guide panel is formed by the housing base (2) of the built-in housing (1) composed of a light-guiding material;
wherein an elongated recess (9) closed at both ends for receiving a light coupling unit (10) is provided centrally in the housing base (2);
wherein at least the rear side of the housing base (2) is provided with microstructures which are distributed uniformly and which reflect, scatter and decouple light and/or is provided with reflective dot patterns and is covered by a light-tight reflection layer (31); and
wherein a peripheral light guide and stabilization frame (3) is provided in the housing (1) at a predefinable spacing from the housing side walls and is fastened via fixing lugs (13) which pass through the housing base (2) and which contact the rear side of the housing base.

10. A built-in luminaire in accordance with claim 9,
**characterized in that**
the light coupling unit (10) is formed
by a heat sink (4) which supports a strip-shaped arrangement of LEDs and which contacts the rear side of the housing base (2) directly or via an intermediate layer, with the strip-shaped arrangement of LEDs extending into the recess (9) of the housing base (2) forming the light guide panel;
by a reflector layer (6) which contacts the light guide panel (2) at the room side and whose central region extends in the form of a beam splitter (18) opposite the LEDs into the recess (9) of the housing base (2); and by a diaphragm part (7) contacting the reflector layer (6) and screwed to the heat sink (4).

## Revendications

1. Luminaire, en particulier luminaire encastré,
comportant un disque conducteur de lumière (2) formant une surface de lumière directe côté local et maintenu dans un boîtier (1), et un agencement (8) de DELs en forme de bande associé à au moins une surface frontale du disque conducteur de lumière (2), pour injecter la lumière dans le disque conducteur de lumière,
dans lequel
le disque conducteur de lumière (2) et le fond de boîtier (11) présentent chacun au centre un évidement allongé (9, 12) fermé aux deux extrémités pour recevoir une unité d'injection de lumière (10),
le fond de boîtier (11) et les parois latérales du boîtier (1) entourant le disque conducteur de lumière (2) sont réalisés sous forme de surfaces réfléchissantes, et
le disque conducteur de lumière (2) est maintenu à plat contre le fond de boîtier (11) au moyen d'un cadre de guidage de lumière (3) qui comporte des pattes de fixation (13) qui traversent le disque conducteur de lumière (2) et le fond de boîtier (11) et qui s'appuient contre le côté arrière du fond de boîtier (11).

2. Luminaire selon la revendication 1,
**caractérisé en ce que**
l'unité d'injection de lumière (10) est formée
par un corps de refroidissement (4) qui porte un agencement de DELs en forme de bande et qui s'appuie contre le côté arrière du fond de boîtier (11) soit directement soit par une couche d'ajustement (5), l'agencement de DELs (8) en forme de bande s'étendant jusque dans l'évidement (9) du disque conducteur de lumière (2) par une traversée (12) dans le fond de boîtier (11),
par une couche réfléchissante (6) qui s'appuie contre le disque conducteur de lumière (2) du côté local et dont la zone centrale s'étend sous la forme d'un séparateur de faisceau (18) à l'opposé des DELs jusque dans l'évidement (9) du disque conducteur de lumière (2),
et par une partie formant cache (7) s'appuyant contre la couche réfléchissante (6) et vissée sur le corps de refroidissement (4).

3. Luminaire selon la revendication 1 ou 2,
**caractérisé en ce que**
le fond de boîtier (11) intérieur recouvert d'un revêtement hautement réfléchissant forme des chambres lumineuses (20) des deux côtés de l'évidement (9) dans le disque conducteur de lumière (2), conjointement avec la couche réfléchissante opposée (6), chambres dans lesquelles des réflexions multiples font que la lumière injectée est distribuée uniformément sur toute la surface du disque conducteur de lumière (2).

4. Luminaire selon la revendication 3,
**caractérisé en ce que**
la surface du disque conducteur de lumière (2) qui s'appuie contre le fond de boîtier (11) est dotée de microstructures qui sont réparties uniformément sur toute la surface et qui réfléchissent, diffusent et extraient la lumière, et/ou de motifs de points réfléchissants.

5. Luminaire selon la revendication 4,
**caractérisé en ce que**
la microstructure est constituée d'une multitude de prismes d'extraction à point double (23) présentant une faible distance ou se chevauchent légèrement, ayant un axe directionnel (24) passant par leurs centres, les axes directionnels (24) d'un premier groupe de prismes d'extraction à point double (23) sont situés sur une première droite, et les axes directionnels (24) d'un deuxième groupe de prismes d'extraction à point double (23) sont situés sur une deuxième droite, et ces deux droites s'étendent sous un angle prédéterminé, en particulier aigu, l'une par rapport à l'autre.

6. Luminaire selon la revendication 2,
**caractérisé en ce que**
le corps de refroidissement (4) est constitué d'une bande solide en aluminium ou d'un profilé extrudé en aluminium sur lequel est collé le panneau de DELs, **en ce que**
dans la zone de l'évidement (9) dans le disque conducteur de lumière (2), la couche réfléchissante (6) est réalisée sous forme de fronton à symétrie centrale pour répartir la lumière DEL sur les deux moitiés du disque conducteur de lumière (2), et **en ce que**
des douilles taraudées (20) sont enfoncées dans la partie formant cache (7) constituée de préférence en tôle d'aluminium, au moyen desquelles et au moyen de vis associées (21) la structure en sandwich est étayée de manière stable.

7. Luminaire selon la revendication 1,
**caractérisé en ce que**
le cadre de guidage de lumière (3) est formé par un cadre profilé ayant un pied de support vertical (25) pour le disque conducteur de lumière (2) et un pied fonctionnel horizontal (26),
le pied fonctionnel (26) pouvant être muni de traversées (27) de forme, de position et de nombre prédéterminés, et/ou formant une surface de support pour des bandes de couleur (28) translucides.

8. Luminaire selon la revendication 7,
**caractérisé en ce que**
le cadre de guidage de lumière (3) présente une distance de la paroi de boîtier, formant un espace lumineux périphérique (29), et le pied fonctionnel (26) s'étend en affleurement avec le bord périphérique (30) du boîtier (1).

9. Luminaire encastré, comportant un boîtier encastré (1) et un disque conducteur de lumière formant une surface de lumière directe côté local et un agencement (8) de DELs en forme de bande associé à au moins une surface frontale du disque conducteur de lumière, pour injecter la lumière dans le disque conducteur de lumière,
dans lequel
le disque conducteur de lumière est formé par le fond de boîtier (2) du boîtier (1) constitué en matériau conducteur de lumière,
un évidement allongé (9) fermé aux deux extrémités est prévu au centre dans le fond de boîtier (2) pour recevoir une unité d'injection de lumière (10),
au moins le côté arrière du fond de boîtier (2) est pourvu de microstructures réparties régulièrement, qui réfléchissent, diffusent et extraient la lumière, et/ou de motifs de points réfléchissants, et est recouvert d'une couche réfléchissante (31) opaque, et
un cadre périphérique de guidage de lumière et de stabilisation (3) est prévu dans le boîtier (1) à une distance prédéfinie des parois latérales du boîtier, cadre qui est fixé par des pattes de fixation (13) qui traversent le fond de boîtier (2) et qui s'appuient contre le côté arrière du fond de boîtier.

10. Luminaire encastré selon la revendication 9,
**caractérisé en ce que**
l'unité d'injection de lumière (10) est formée
par un corps de refroidissement (4) qui porte un agencement de DELs en forme de bande et qui s'appuie contre le côté arrière du fond de boîtier (2) soit directement soit par une couche intermédiaire, l'agencement de DELs (8) en forme de bande s'étendant jusque dans l'évidement (9) du fond de boîtier (2) formant le disque conducteur de lumière, et
par une couche réfléchissante (6) qui s'appuie contre le disque conducteur de lumière (2) du côté local et dont la zone centrale s'étend sous la forme d'un séparateur de faisceau (18) à l'opposé des DELs jusque dans l'évidement (9) du fond de boîtier (2),
et par une partie formant cache (7) s'appuyant contre la couche réfléchissante (6) et vissée sur le corps de refroidissement (4).
